# EUROPEAN PATENT SPECIFICATION

(11) **EP 3 505 014 B1**
(45) Date of publication and mention of the grant of the patent: **17.11.2021**
(21) Application number: 17906048.8
(22) Date of filing: 14.12.2017
(51) Int. Cl.: A47C 19/00, A47C 19/12, F16B 12/54, A47C 19/02, A47C 20/04

(54) **DETACHABLE ELECTRIC-POWERED BED FRAME**
ABNEHMBARES ELEKTRISCH ANGETRIEBENES BETTGESTELL
CADRE DE LIT ÉLECTRIQUE AMOVIBLE

(30) Priority: 21.04.2017 CN 201710264727
(43) Date of publication of application: 03.07.2019
(73) Proprietor: Keeson Technology Corporation Limited, Jiaxing, Zhejiang 314016 (CN)
(72) Inventor: SHAN, Huafeng, Jiaxing, Zhejiang 314016 (CN); WANG, Jian, Jiaxing, Zhejiang 314016 (CN)
(74) Representative: Viering, Jentschura & Partner mbB Patent- und Rechtsanwälte
(86) International application number: PCT/CN2017/116262
(87) International publication number: WO 2018/192247

(56) References cited:
- CN-A- 105 476 325
- CN-U- 202 820 454
- CN-U- 202 820 454
- CN-U- 204 580 603
- CN-U- 204 995 040
- CN-U- 205 696 778
- US-A1- 2016 045 383
- US-B2- 9 226 588

## Description

### FIELD OF THE TECHNOLOGY

The present disclosure relates to an electric bed frame capable of being disassembled.

### BACKGROUND OF THE TECHNOLOGY

With the improvement of people's living standards, electric beds have found a wide range of applications. Common electric beds are usually designed in one piece. That means a large bed frame is provided fixedly therein with a plurality of mechanical and electric components connected through electric wires and cables, and the bed frame is also provided with detachable legs. Such one-piece electric beds are not only structurally complex but also large and heavy. This leads to inconvenience in packaging and transporting these electric beds and increases difficulty in delivering them to users' home. In addition, due to restrictions of residential lifts or stairs, it becomes more difficult to carry such one-piece electrical beds, and intensity of the work is greatly increased. Some electric beds cannot even be carried to users' home by any means. This greatly limits the application of electric beds.

In existing electric beds capable of being disassembled, hinges are usually used to connect a head bed frame and a foot bed frame. When the electric bed needs to be folded, components inside the bed and legs of the bed are detached first, and then the head bed frame and the foot bed frame are folded. These components and bed frames are then packaged separately for delivery. When they are delivered to the user's home, professional technicians are sent to the user's home for the installation of the bed, during which a set of spanners are needed for the assembly of the electric bed. This results in low installation efficiency and an increase of the after-sale service fee.

US 9 226 588 B2 discloses an electric bed frame capable of being disassembled, comprising: a head bed frame, which comprises a rotatable first bed plank and a head drive assembly for driving the first bed plank to rotate; and a foot bed frame, which comprises a rotatable fourth bed plank and a foot drive assembly for driving the fourth bed plank to rotate; wherein the head bed frame is provided with a first coupler, and the foot bed frame is provided with a second coupler, the first coupler comprising a first upper surface, the second coupler comprising a second upper surface the first coupler of the head bed frame being capable of being detachably connected to the second coupler of the foot bed frame via a fastener, wherein when the head bed frame and the foot bed frame are connected to each other. Some further devices are disclosed in CN 202 820 454 U and CN 204 955 040 U.

### SUMMARY

An objective of the present disclosure is to provide a new type of electric bed frame capable of being disassembled, to overcome at least the above defects.

According to the present invention, an electric bed as defined by claim 1 is provided. The dependent claims show some examples thereof.

In order to achieve the above objective, the present disclosure provides an electric bed frame capable of being disassembled, which overcomes the defects of conventional electric beds of being difficult to package, transport, and carry, saves packaging materials and transporting cost, facilitates home-delivery of electric beds, simplifies installation thereof, improves installation efficiency, and decreases the after-service fee.

Due to the above configurations, the electric bed frame of the present disclosure can be separately packaged and transported, and will not occupy a large area and affect the transporting of the electric bed. The fitting connection between the first coupler and the second coupler is simple and practical, and thus improves the installation and assembling efficiency.

In different embodiments of the electric bed capable of being disassembled according to the present disclosure, one may rely on one and/or more of the following configurations.

In one configuration, the first upper surface of the first coupler has a flange at an external edge thereof. When the first upper surface of the first coupler covers the second upper surface of the second coupler, the flange of the first upper surface of the first coupler wraps the second upper surface of the second coupler and limits the second upper surface of the second coupler to move relative to the first upper surface of the first coupler. A firmer connection is thus realized.

In another configuration, the first coupler further comprises a first side surface supporting the first upper surface, and the second coupler further comprises a second side surface supporting the second upper surface. When the first upper surface of the first coupler covers the second upper surface of the second coupler, the first side surface of the first coupler is fitted onto the second side surface of the second coupler. This further limits the second coupler from moving relative to the second coupler.

In one configuration, the first coupler further comprises a third side surface supporting the first upper surface, and the second coupler further comprises a fourth side surface supporting the second upper surface, the third side surface and the fourth side surface having through-holes corresponding to each other, and the through-hole of the fourth side surface having a fixed screw nut welded on an inner side thereof, so that a threaded fastener is screwed into the screw nut. The firmness of the connection between the first coupler and the second coupler is thus improved.

In another configuration, the first upper surface of the first coupler and the second upper surface of the second coupler are on a same horizontal level with the head bed frame and the foot bed frame.

The fastening of the first coupler and the second coupler via a built-in fastener of the leg may help to save the installation parts and reduce manufacturing cost.

In another configuration, at least a portion of the first upper surface of the first coupler projects from the head bed frame, and at least a portion of the second upper surface of the second coupler projects from the foot bed frame, so that when the first upper surface of the first coupler covers the second upper surface of the second coupler, the head bed frame are fitted closely to the foot bed frame.

Because of these configurations, the electric bed frame capable of being disassembled of the present disclosure can be easily disassembled into two parts, and after the folding it occupies a reduced area that is only about half of the original area. The electric bed frame overcomes the defects of conventional electric beds of being difficult to package, transport, and carry, saves packaging materials and transporting cost, reduces the size of electric beds and facilitates home-delivery thereof. After the electric bed is carried home, the user only needs to spread flat the head bed frame and the foot bed frame of the electric bed and rotate them to the right position before using the bed. This eliminates the defect in the existing technologies that the detached assemblies or bed legs have to be mounted back to an electric bed by using spanners. The installation efficiency is thus greatly improved, the installation is simplified, and the after-service fee is decreased.

### BRIEF DESCRIPTION OF THE DRAWINGS

It shall be appreciated that in the present disclosure, unless apparent contradictions or incompatibility exist, all the features, variations, and/or specific embodiments may be combined with one another in a number of ways.

Other features and advantages of the present disclosure will become self-evident by reading the following specifically described nonrestrictive embodiments in conjunction with the accompanying drawings. In the drawings,
Fig. 1 schematically shows a structure of an electric bed frame capable of being disassembled of an embodiment of the present disclosure in a disassembled state;
Fig. 2 shows a partial enlarged view of a first coupler and a second coupler on a side of the electric bed frame capable of being disassembled as shown in Fig. 1;
Fig. 3 shows a partial enlarged view of a first coupler and a second coupler on another side of the electric bed frame capable of being disassembled as shown in Fig. 1;
Fig. 4 schematically shows fitting of the first coupler onto the second coupler of the electric bed frame capable of being disassembled as shown in Fig. 3;
Fig. 5 schematically shows a structure of an electric bed frame capable of being disassembled of an embodiment of the present disclosure with legs mounted thereon; and
Fig. 6 shows a partial enlarged view of a first coupler and a second coupler of an electric bed frame capable of being disassembled of another embodiment of the present disclosure.

### DETAILED DESCRIPTION

It shall be appreciated that the abovementioned drawings are not drawn to actual scale, and they are merely diagrams of a number of preferred features for illustrating principles of the present disclosure. The design features, such as size, directions, orientations, and shapes disclosed in the present disclosure depend on specific applications and service environments.

The present disclosure will be illustrated in detail below in conjunction with the embodiments and the accompanying drawings. In these drawings, same reference numbers indicate same or equivalent components of the present disclosure.

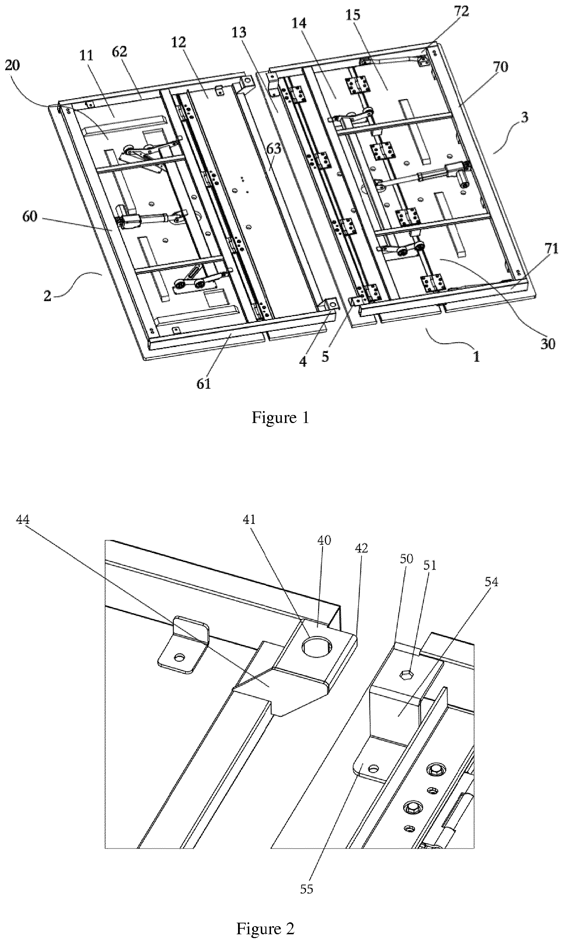

The term "upward" or similar expressions thereof refer herein to a direction of a bottom surface of the electric bed of Fig. 1 being directed upward.

Fig. 1 schematically shows an electric bed frame 1 capable of being disassembled of an embodiment of the present disclosure. The electric bed frame 1 comprises a head bed frame 2 and a foot bed frame 3. The head bed frame 2 is provided with a first coupler 4, and the foot bed frame 3 is provided with a second coupler 5. The first coupler 4 of the head bed frame 2 and the second coupler 5 of the foot bed frame 3 match each other and are securable to each other by a fastener, so that the head bed frame 2 and the foot bed frame 3 are connectable to each other to form a whole. Such a structure is advantageous in that the head bed frame and the foot bed frame can be separately packaged, so as to reduce a total area that the electric bed occupies when being packaged and transported, thereby improving the transporting efficiency and facilitating the carrying of the bed.

The head bed frame 2 further comprises: a second bed plank 12 that is fixed in the head bed frame 2, a rotatable first bed plank 11 that is hinged to the second bed plank, and a head drive assembly 20 for driving the first bed plank to rotate. The foot bed frame 3 further comprises: a third bed plank 13 that is fixed in the foot bed frame, a rotatable fourth bed plank 14 that is hinged to the third bed plank, and a foot drive assembly 30 for driving the fourth bed plank to rotate. Preferably, a fifth bed plank 15 is hinged to the fourth bed plank 14 and is configured to move with ascending and descending of the fourth bed plank 14.

Specifically, the head bed frame 2 comprises: a head front beam 60, head side beams 61, 62 provided at two sides of the head front beam 60, and a head rear beam 63 provided opposite the head front beam 63, which together form a substantially rectangular frame structure. A pair of first couplers 4 is provided at an interconnecting point of the head rear beam 63 and the head side beams 61, 62 at the two sides of the head front beam.

The foot bed frame 3 comprises a foot rear beam 70, and foot side beams 71, 72 provided at two sides of the foot rear beam 70. Different from those of the head bed frame 2, a pair of second couplers 5 of the foot bed frame 3 are fixed on a bottom surface of the third bed plank 13 and are provided close to the foot side beams 71, 72 at the two sides of the foot rear beam 70.

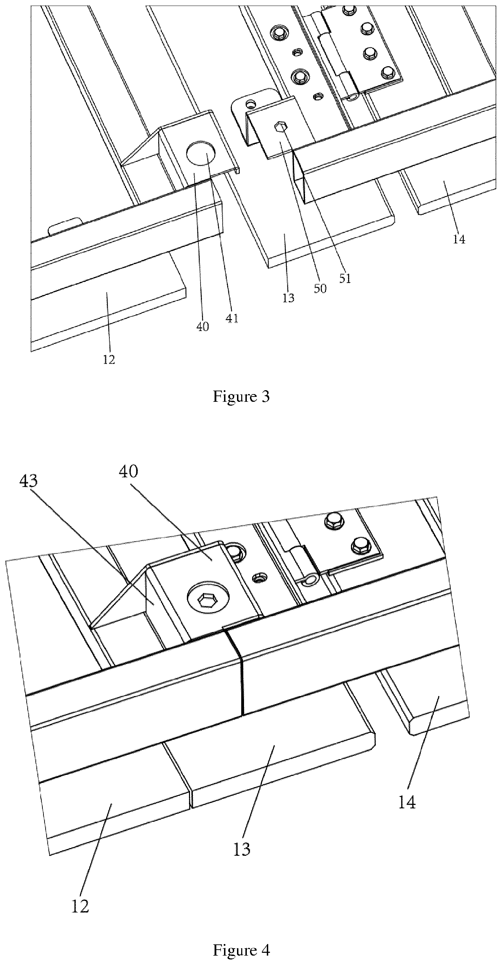

Figs. 2 and 3 show partial enlarged views of the first coupler 4 and the second coupler 5.

The first coupler 4 extends upward from the head rear beam 63 to a height that is flush with the head side beams 61, 62, and has a first upper surface 40 extending horizontally at said height. At least a portion of the first upper surface 40 is welded to the head side beam, and at least another portion thereof projects beyond the head side beam. The first upper surface 40 of the first coupler 4 has a first through-hole 41 at a central area thereof.

The second coupler 5 has a bottom 55 that is fixed on the third bed plank 13, and a second upper surface 50 extending upward from the bottom 55 to a height that is flush with the foot side beams 71, 72. At least a portion of the second upper surface 50 is welded to the foot side beam 71, 72, and at least another portion thereof projects beyond the foot side beam 71, 72. The second upper surface 50 of the second coupler 5 has a second through-hole 51 at a central area thereof. The second through-hole 51 has a size smaller than a size of the first through-hole 41.

Further, the first upper surface 40 of the first coupler 4 has an area larger than an area of the second upper surface 50 of the second coupler 5, so that when the head bed frame 2 and the foot bed frame 3 are connected to each other, the first upper surface 40 of the first coupler 4 covers the second upper surface 50 of the second coupler 5, and the first coupler 4 and the second coupler 5 are fastened to each other via the fastener passing through the first through-hole 41 and the second through-hole 51, thereby enabling the electric bed frame capable of being disassembled to form a whole. In particular, in order to prevent the second upper surface 50 of the second coupler 5 from moving relative to the first upper surface 40 of the first coupler 4, the first upper surface 40 of the first coupler 4 further comprises a flange 42 extending downward.

Further, in order to prevent the second upper surface 50 of the second coupler 5 to move relative to the first upper surface 40 of the first coupler 4, the first coupler further comprises a first side surface 44 supporting the first upper surface, and the second coupler further comprises a second side surface 54 supporting the second upper surface. When the first upper surface of the first coupler covers the second upper surface of the second coupler, the first side surface of the first coupler is fitted onto the second side surface of the second coupler.

Fig. 4 shows an enlarged partial view of the first coupler 4 covering the second coupler 5. At this moment, the head side beam 61 of the head bed frame 2 is close to the foot side beam 71 of the foot bed frame 3, and at least a portion of the head side beam 61 is supported on the third bed plank 13.

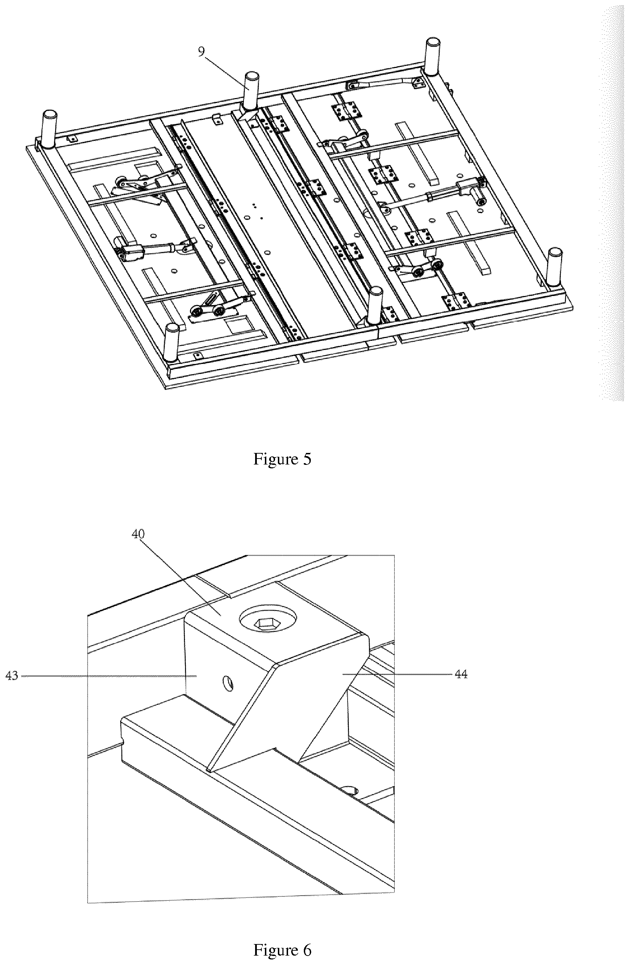

Fig. 5 schematically shows legs 9 being mounted, through built-in fasteners (not shown) thereof, on the first couplers 4 fitted onto the second couplers 5. As can be seen from the figure, the use of the built-in fasteners of the legs 9 may save installation parts and thus decrease manufacturing cost.

As shown in Fig. 6, in another example, the whole bed may be used without legs. In this example, a third side surface 43 of the first coupler and a fourth side surface (not shown) of the second coupler have through-holes corresponding to each other, the through-hole of the fourth side surface has a fixed screw nut welded on an inner side thereof, so that a threaded fastener may be screwed into the screw nut. This example is mainly suitable for tatami or other flat beds and so on.

Furthermore, the head drive assembly 20 and the foot drive assembly 30 may be any known drive assemblies in the existing technologies, and will not be described herein in detail.

The above embodiments serve only as examples and are not used to limit the scope of the present disclosure. Those skilled persons in the art may expect other embodiments capable of achieving same functions based on the above embodiments and within the protection scope of the present disclosure.

Those skilled persons in the art may master different embodiments, variations, and improvements. In particular, it shall be noted that unless apparent contradictions or incompatibility exist, the above features, variations, and/or specific embodiments of the present disclosure may be combined with one another. All these embodiments and variations as well as improvements shall fall within the protection scope of the appended claims.

## Claims

1. An electric bed frame (1) capable of being disassembled, comprising:
a head bed frame (2), which comprises a rotatable first bed plank (11) and a head drive assembly (20) for driving the first bed plank to rotate; and
a foot bed frame (3), which comprises a rotatable fourth bed plank (14) and a foot drive assembly (30) for driving the fourth bed plank to rotate;
wherein the head bed frame is provided with a first coupler (4), and the foot bed frame is provided with a second coupler (5), the first coupler comprising a first upper surface (40) having a first through-hole (41), the second coupler comprising a second upper surface (50) having a second through-hole (51), the first coupler of the head bed frame being capable of being detachably connected to the second coupler of the foot bed frame via a fastener, wherein when the head bed frame and the foot bed frame are connected to each other, the first upper surface of the first coupler covers the second upper surface of the second coupler, and the second through-hole exposes from the first through-hole so as to enable a connection via the fastener, and wherein the first upper surface of the first coupler and the second upper surface of the second coupler are located in a horizontal direction,
further comprising legs (9) which are adapted to be mounted, perpendicular to the first upper surface of the first coupler, on the first upper surface.

2. The electric bed frame capable of being disassembled according to claim 1, wherein the first upper surface of the first coupler has a flange (42) at an external edge thereof, wherein when the first upper surface of the first coupler covers the second upper surface of the second coupler, the flange of the first upper surface of the first coupler wraps the second upper surface of the second coupler and limits the second upper surface of the second coupler to move relative to the first upper surface of the first coupler.

3. The electric bed frame capable of being disassembled according to claim 1 or 2, wherein the first coupler further comprises a first side surface (44) supporting the first upper surface, and the second coupler further comprises a second side surface (54) supporting the second upper surface, wherein when the first upper surface of the first coupler covers the second upper surface of the second coupler, the first side surface of the first coupler is fitted onto the second side surface of the second coupler.

4. The electric bed frame capable of being disassembled according to claim 1 or 2, wherein the first coupler further comprises a third side surface (43) supporting the first upper surface, and the second coupler further comprises a fourth side surface supporting the second upper surface, the third side surface and the fourth side surface having through-holes corresponding to each other, and the through-hole of the fourth side surface having a fixed screw nut welded on an inner side thereof, so that a threaded fastener is screwed into the screw nut.

5. The electric bed frame capable of being disassembled according to claim 1 or 2, wherein the first upper surface of the first coupler and the second upper surface of the second coupler are on a same horizontal level with the head bed frame and the foot bed frame.

6. The electric bed frame capable of being disassembled according to claim 1 or 2, wherein at least a portion of the first upper surface of the first coupler projects from the head bed frame, and at least a portion of the second upper surface of the second coupler projects from the foot bed frame, so that when the first upper surface of the first coupler covers the second upper surface of the second coupler, the head bed frame are fitted closely to the foot bed frame.

## Patentansprüche

1. Auseinanderbaubarer elektrischer Bettrahmen (1), aufweisend:
einen Kopfteil-Bettrahmen (2), welcher eine drehbare erste Bettplatte (11) und eine Kopfteil-Antriebsvorrichtung (20) aufweist zum Antreiben der ersten Bettplatte, um sich zu drehen, und
einen Fußteil-Bettrahmen (3), welcher eine drehbare vierte Bettplatte (14) und eine Fußteil-Antriebsvorrichtung (30) aufweist zum Antreiben der vierten Bettplatte, um sich zu drehen,
wobei der Kopfteil-Bettrahmen mit einer ersten Verbindungsvorrichtung (4) versehen ist, und der Fußteil-Bettrahmen mit einer zweiten Verbindungsvorrichtung (5) versehen ist, wobei die erste Verbindungsvorrichtung eine erste obere Fläche (40) aufweist, welche ein erstes Durchgangsloch (41) hat, die zweite Verbindungsvorrichtung eine zweite obere Fläche (50) aufweist, welche ein zweites Durchgangsloch (51) hat, und die erste Verbindungsvorrichtung des Kopfteil-Bettrahmens in der Lage ist, mit der zweiten Verbindungsvorrichtung des Fußteil-Bettrahmens über ein Befestigungsmittel lösbar verbunden zu sein, wobei, wenn der Kopfteil-Bettrahmen und der Fußteil-Bettrahmen miteinander verbunden sind, die erste obere Fläche der ersten Verbindungsvorrichtung die zweite obere Fläche der zweiten Verbindungsvorrichtung bedeckt, und das zweite Durchgangsloch von dem ersten Durchgangsloch ausgespart ist, um eine Verbindung über das Befestigungsmittel zu ermöglichen, und wobei die erste obere Fläche der ersten Verbindungsvorrichtung und die zweite obere Fläche der zweiten Verbindungsvorrichtung in einer horizontalen Richtung angeordnet sind,
ferner aufweisend:
Beine (9), welche angepasst sind, um senkrecht zu der ersten oberen Fläche der ersten Verbindungsvorrichtung an der ersten oberen Fläche montiert zu sein.

2. Auseinanderbaubarer elektrischer Bettrahmen gemäß Anspruch 1, wobei die erste obere Fläche der ersten Verbindungsvorrichtung einen Flansch (42) an einem Außenrand davon hat, wobei, wenn die erste obere Fläche der ersten Verbindungsvorrichtung die zweite obere Fläche der zweiten Verbindungsvorrichtung bedeckt, der Flansch der ersten oberen Fläche der ersten Verbindungsvorrichtung die zweite obere Fläche der zweiten Verbindungsvorrichtung ummantelt und die zweite obere Fläche darin beschränkt, sich relativ zu der ersten oberen Fläche der ersten Verbindungsvorrichtung zu bewegen.

3. Auseinanderbaubarer elektrischer Bettrahmen gemäß Anspruch 1 oder 2, wobei die erste Verbindungsvorrichtung ferner eine erste seitliche Fläche (44) aufweist, welche die erste obere Fläche stützt, und die zweite Verbindungsvorrichtung ferner eine zweite seitliche Fläche (54) aufweist, welche die zweite obere Fläche stützt, wobei, wenn die erste obere Fläche der ersten Verbindungsvorrichtung die zweite obere Fläche der zweiten Verbindungsvorrichtung bedeckt, die erste seitliche Fläche der ersten Verbindungsvorrichtung auf der zweiten seitlichen Fläche der zweiten Verbindungsvorrichtung angeordnet ist.

4. Auseinanderbaubarer elektrischer Bettrahmen gemäß Anspruch 1 oder 2, wobei die erste Verbindungsvorrichtung ferner eine dritte seitliche Fläche (43) aufweist, welche die erste obere Fläche stützt, und die zweite Verbindungsvorrichtung ferner eine vierte seitliche Fläche aufweist, welche die zweite obere Fläche stützt, wobei die dritte seitliche Fläche und die vierte seitliche Fläche Durchgangslöcher haben, welche miteinander korrespondieren, und das Durchgangsloch der vierten seitlichen Fläche eine fixierte Schraubenmutter aufweist, welche an einer Innenseite davon angeschweißt ist, so dass ein Befestigungsmittel mit Gewinde in die Schraubenmutter hinein eingeschraubt ist.

5. Auseinanderbaubarer elektrischer Bettrahmen gemäß Anspruch 1 oder 2, wobei die erste obere Fläche der ersten Verbindungsvorrichtung und die zweite obere Fläche der zweiten Verbindungsvorrichtung sich mit dem Kopfteil-Bettrahmen und dem Fußteil-Bettrahmen auf demselben horizontalen Niveau befinden.

6. Auseinanderbaubarer elektrischer Bettrahmen gemäß Anspruch 1 oder 2, wobei mindestens ein Abschnitt der ersten oberen Fläche der ersten Verbindungsvorrichtung von dem Kopfteil-Bettrahmen hervorsteht, und mindestens ein Abschnitt der zweiten oberen Fläche der zweiten Verbindungsvorrichtung von dem Fußteil-Bettrahmen hervorsteht, so dass, wenn die erste obere Fläche der ersten Verbindungsvorrichtung die zweite obere Fläche der zweiten Verbindungsvorrichtung bedeckt, der Kopfteil-Bettrahmen eng an den Fußteil-Bettrahmen angebracht ist.

## Revendications

1. Cadre de lit électrique (1) pouvant être démonté, comprenant :
un cadre de lit côté tête (2), qui comprend une première planche de lit rotative (11) et un ensemble d'entraînement côté tête (20) pour entraîner la première planche de lit en rotation ; et
un cadre de lit côté pied (3), qui comprend une quatrième planche de lit rotative (14) et un ensemble d'entraînement côté pied (30) pour entraîner la quatrième planche de lit en rotation ;
dans lequel le cadre de lit côté tête est pourvu d'un premier coupleur (4), et le cadre de lit côté pied est pourvu d'un second coupleur (5), le premier coupleur comprenant une première surface supérieure (40) ayant un premier trou traversant (41), le second coupleur comprenant une seconde surface supérieure (50) ayant un second trou traversant (51), le premier coupleur du cadre de lit côté tête étant capable d'être relié de manière amovible au second coupleur du cadre de lit côté pied par l'intermédiaire d'une fixation, dans lequel, lorsque le cadre de lit côté tête et le cadre de lit côté pied sont reliés l'un à l'autre, la première surface supérieure du premier coupleur recouvre la seconde surface supérieure du second coupleur, et le second trou traversant est exposé à partir du premier trou traversant de manière à permettre une connexion par l'intermédiaire de la fixation, et dans lequel la première surface supérieure du premier coupleur et la seconde surface supérieure du second coupleur sont situées dans une direction horizontale,
comprenant en outre des pieds (9) qui sont adaptés pour être montés, perpendiculairement à la première surface supérieure du premier coupleur, sur la première surface supérieure.

2. Cadre de lit électrique pouvant être démonté selon la revendication 1, dans lequel la première surface supérieure du premier coupleur comporte une bride (42) au niveau d'un bord externe de celui-ci, dans lequel, lorsque la première surface supérieure du premier coupleur recouvre la seconde surface supérieure du second coupleur, la bride de la première surface supérieure du premier coupleur enveloppe la seconde surface supérieure du second coupleur et limite le déplacement de la seconde surface supérieure du second coupleur par rapport à la première surface supérieure du premier coupleur.

3. Cadre de lit électrique pouvant être démonté selon la revendication 1 ou 2, dans lequel le premier coupleur comprend en outre une première surface latérale (44) supportant la première surface supérieure, et le second coupleur comprend en outre une deuxième surface latérale (54) supportant la seconde surface supérieure, dans lequel lorsque la première surface supérieure du premier coupleur recouvre la seconde surface supérieure du second coupleur, la première surface latérale du premier coupleur est ajustée sur la deuxième surface latérale du second coupleur.

4. Cadre de lit électrique pouvant être démonté selon la revendication 1 ou 2, dans lequel le premier coupleur comprend en outre une troisième surface latérale (43) supportant la première surface supérieure, et le second coupleur comprend en outre une quatrième surface latérale supportant la seconde surface supérieure, la troisième surface latérale et la quatrième surface latérale ayant des trous traversants correspondant l'un à l'autre, et le trou traversant de la quatrième surface latérale ayant un écrou de vis fixe soudé sur un côté intérieur de celui-ci, de sorte qu'un élément de fixation fileté est vissé dans l'écrou de vis.

5. Châssis de lit électrique pouvant être démonté selon la revendication 1 ou 2, dans lequel la première surface supérieure du premier coupleur et la seconde surface supérieure du second coupleur sont sur un même niveau horizontal avec le cadre de lit côté tête et le cadre de lit côté pied.

6. Cadre de lit électrique pouvant être démonté selon la revendication 1 ou 2, dans lequel au moins une partie de la première surface supérieure du premier coupleur fait saillie du cadre de lit côté tête, et au moins une partie de la seconde surface supérieure du second coupleur fait saillie du cadre de lit côté pied, de sorte que lorsque la première surface supérieure du premier coupleur recouvre la seconde surface supérieure du second coupleur, le cadre de lit côté tête est ajusté étroitement sur le cadre de lit côté pied.
